# EUROPÄISCHE PATENTSCHRIFT

(11) **EP 1 203 178 B1**
(45) Veröffentlichungstag und Bekanntmachung des Hinweises auf die Patenterteilung: **12.05.2004**
(21) Anmeldenummer: 00962205.1
(22) Anmeldetag: 05.08.2000
(51) Int. Cl.: F16J 15/32

(54) **BÜRSTENDICHTRING**
BRUSH SEALING RING
BAGUE D'ETANCHEITE SOUS FORME DE BROSSE

(30) Priorität: 11.08.1999 DE 19937932
(43) Veröffentlichungstag der Anmeldung: 08.05.2002
(73) Patentinhaber: MTU Aero Engines GmbH, 80976 München (DE)
(72) Erfinder: DILGER, Manfred, 82275 Emmering (DE); PRINS, Lodewijk, 86495 Eurasburg (DE)
(74) Vertreter: Lindner-Vogt, Karin, Dipl.-Phys.
(86) Internationale Anmeldenummer: PCT/DE2000/002621
(87) Internationale Veröffentlichungsnummer: WO 2001/013013

(56) Entgegenhaltungen:
- DE-A- 3 305 649
- DE-A- 19 628 559
- DE-A- 19 720 649
- DE-C- 3 429 708
- GB-A- 2 033 026
- US-A- 5 165 758

## Beschreibung

Die Erfindung betrifft einen Bürstendichtring für den Einsatz als Dichtungselement zwischen relativ zueinander beweglichen Bauteilen, gemäß dem Oberbegriff des Patentanspruches 1, wie z.B. aus der GB-A-2 033 026 bekannt.

Bürstendichtringe dieser Art können mit radial nach außen, radial nach innen oder axial seitlich vorstehenden Borsten versehen sein. In Zusammenwirkung mit einer glatten, verschleißfesten Bauteilgegenfläche mit vorzugsweise kreiszylindrischer oder ebener Geometrie bildet ein installierter Bürstendichtring die eigentliche Bürstendichtung. Um die Borsten von Zentrifugalkräften frei zu halten, werden die Bürstendichtringe in der Regel statorfest installiert. Neben rotierenden Bauteilen, wie z.B. Wellen, lassen sich auch oszillierende oder wenig bewegte, quasistatische Bauteile mit Bürsten abdichten, wobei eine solche Abdichtung nicht-hermetisch ist, d.h. mit einer gewissen Leckage arbeitet. Die abzudichtenden Medien sind bevorzugt gasförmig.

Die DE 3429 708 C1 schützt eine Bürstendichtung, deren Borsten als Werkstoffverbunde ausgeführt sind. Dabei soll der Borstenkern federelastisch, d.h. reversibel elastisch verformbar sein, der Borstenmantel soll gut wärmeleitend bzw. reibungsund verschleißmindernd sein. Es wird eine Vielzahl von Werkstoffen bzw. Werkstoffkombinationen genannt, welche in diesem Sinne geeignet sein können. U.a. wird auf Kunststoff als Kem- oder Hüllenmaterial hingewiesen, die am Ende der Beschreibung stehende Tabelle nennt konkret Kevlar, d.h. Aramidfasern, als Borstenkernwerkstoff, der metallisch überzogen sein kann. Aus dem Gesamtzusammenhang, speziell den Figuren, geht hervor, daß hier Borsten im Sinne von geraden, separaten Marterialabschnitten mit definierten Querschnitten angesprochen sind, welche sich gut handhaben, z.B. greifen, bündeln, klemmen, löten, kleben, sintern usw. lassen.

Wer die feine, "engelshaarartige" Struktur von Aramidfasersträngen, -fäden etc. kennt, dem ist klar, daß sich diese nicht oder nur mit unwirtschaftlich hohem Aufwand nach dem obengenannten Patent zu Borsten bzw. Bürsten umgestalten lassen.

Die EP 0 211 275 B 1 betrifft ein Verfahren einschließlich Vorrichtung zur Herstellung einer Bürstendichtung in Wickeltechnik. Dabei wird Borstenmaterial in Fadenoder Drahtform über zwei parallele Dorne gewickelt, mit Klemmleisten gefaßt und zwischen den Dornen durchtrennt. Die dabei entstehenden, zunächst geraden Bürsten werden zu Ringen gebogen und gefügt, so daß in sich geschlossene Bürstendichtringe mit einseitig hervorstehenden Borsten vorliegen. Die Borstenenden können anschließend durch Kürzen noch genauer auf Fertigmaß bearbeitet werden. Das Patent zielt hauptsächlich auf Metall und Keramik als Borstenmaterial ab, d.h. auf "drahtiges", hartes Material mit definiertem Querschnitt. Die - neben Metall - in diesem Zusammenhang besonders interessante Siliziumkarbidfaser (SiC-Faser) macht insofern Probleme, als sie sich in der für Bürsten bevorzugten Dicke nicht mehr um enge Radien wickeln läßt, so daß ein im Querschnitt größerer Kern (Dorn) und ein entsprechend im Durchmesser größeres Klemmprofil benötigt wird. Das von dem EP-Patent geschützte Verfahren wird bis dato i.w. nur für Metallbürsten eingesetzt.

Die DE 197 20 649 A behandelt eine Bürstendichtung mit einer speziellen Gehäusegeometrie, welche die Borstenabstützung im Betrieb, d.h. unter Druckdifferenz, verbessert und dadurch die Leckage reduziert. Man erkennt die schlaufenartige Borstenanordnung um einen Drahtkern herum mit Fixierung durch ein Klemmstück, Ein derartiger Bürstendichtring läßt sich in vorteilhafter Weise nach dem Verfahren gemäß der EP 0 211 275 B 1 fertigen. Über das Borstenmaterial sagt die DE 197 20 649 A1 nichts Konkretes aus.

Demgegenüber besteht die Aufgabe der Erfindung darin, einen Bürstendichtring mit Borsten auf Basis von Aramidfasem zu gestalten, der sich durch eine günstige Herstellung, eine definierte und reproduzierbare Bürstenstruktur sowie ein gutes und kalkulierbares Dichtungsverhalten auszeichnet.

Diese Aufgabe wird durch die in Anspruch 1 gekennzeichnete Kombination von Merkmalen gelöst, in Verbindung mit den gattungsbildenden Merkmalen in dessen Oberbegriff.

Überraschenderweise hat sich ergeben, daß sich die feinen, "engelshaarartigen" Stränge bzw. Fäden aus Aramidfasern zuverlässig durch Klemmung, d.h. reibschlüssig, fixieren und orientieren lassen. Die schlaufenförmige Anordnung um einen Kern herum bewirkt eine besonders schonende, zuverlässige Fixierung durch eine große "Klemmlänge" je Borste/Abschnitt in Kontakt mit einem umgreifenden Klemmprofil. Ein wichtiger fertigungstechnischer Aspekt liegt darin, daß die Borsten Abschnitte von in gewickelter Anordnung vorliegenden Strängen bzw. Fäden sind, da sich das zu verwendende Aramidfasermaterial nur in Wickeltechnik effektiv handhaben läßt. Es sei angemerkt, daß eine Bürste dieser Art keine klar zu unterscheidenden, steifen Borsten mit definierten Querschnitten aufweist, sondern viel mehr einem feinen Haarpinsel mit in Grenzen variierenden Haargeometrien gleicht.

In den Unteransprüchen sind bevorzugte Ausgestaltungen des Bürstendichtrings nach dem Hauptanspruch gekennzeichnet. Die Erfindung betrifft auch, gemäß Ansprüche 6 und 7, spezielle Verwendungen eines derartigen Bürstendichtrings.

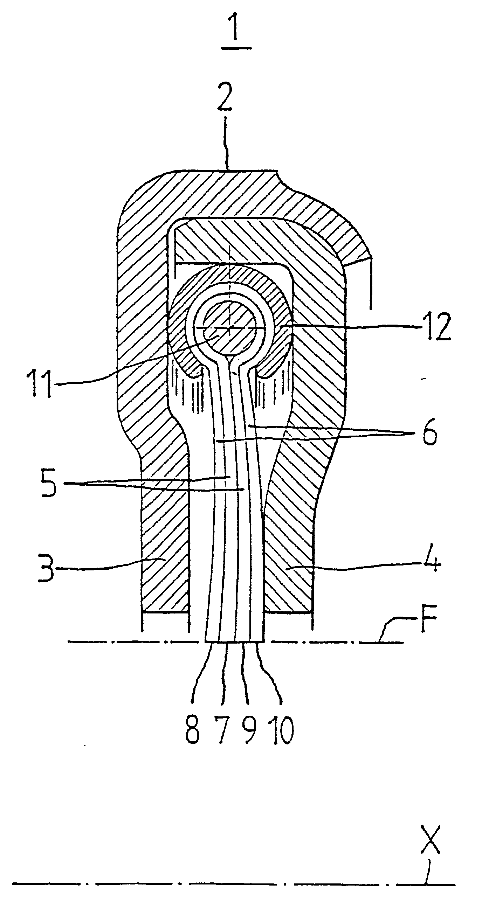

Die Erfindung wird anschließend anhand der Zeichnung noch näher erläutert. Die Figur zeigt in nicht maßstäblicher Darstellung einen Querschnitt, d.h. einen axialradialen Schnitt durch einen Bürstendichtring.

Der Bürstendichtring 1 weist als tragendes, schützendes und auch dichtendes Element ein ringförmiges, zumindest im wesentlichen rotationssymmetrisches Gehäuse 2 auf. Aus Fertigungsgründen ist dieses aus zwei Teilen, einer Deckplatte 3 und einer Stützplatte 4, zusammengesetzt, welche sich hier im oberen Bereich axial überlappen und formschlüssig verbunden sind, vorzugsweise durch Bördeln. Die Längsmittelachse X des Bürstendichtrings 1 befindet sich hier auf der Seite des Gehäuses 2, auf der auch die Borsten aus letzterem hervorstehen. Somit stehen die Borsten radial nach innen - zur Mitte hin- aus der Gehäusekontur vor, um mit einem zentralen, runden Gegenbauteil, insbesondere einer rotierenden Welle, zusammenzuwirken, wobei die Achse des - hier nicht gezeigten - Gegenbauteils mit der Längsmittelachse X identisch sein sollte.
Der Bürstendichtring könnte auch so aufgebaut sein, daß die Borsten radial über seinen Außenumfang vorstehen, um beispielsweise mit einer Hohlwelle als Gegenbauteil zusammenzuwirken. Ausgehend von der vorliegenden Darstellung müßte die Längsmittelachse dann oberhalb des geschnittenen Gehäuses liegen.

Eine weitere Bauform des Bürstendichtrings könnte so aussehen, daß die Borsten seitlich axial aus dem Gehäuse vorstehen und mit einem im Dichtbereich ebenen Gegenbauteil zusammenwirken. Ausgehend von der vorliegenden Darstellung würde die Längsmittelachse dann vertikal verlaufen und seitlich rechts oder links vom Gehäuseschnitt liegen.
All diese Modifikationen haben keinen Einfluß auf das Wesen der Erfindung.

Die eigentliche Erfindung liegt hier in einem bestmöglich werkstoffgerechten, konstruktiven Aufbau der Bürste selbst. Ausgangsmaterial für die Borsten sind Fasern aus aromatischen Polyamiden, d.h. Aramidfasern, welche eher unter der Bezeichnung, "Kevlar" bzw. "Kevlarfasern" bekannt sind. Die Fasern sind zu Strängen bzw. Fäden zusammengefaßt, welche in aufgespulter Form erhältlich sind. Von den Strängen bzw. Fäden werden Abschnitte gemacht, weiche die Borsten der Bürste bilden. Ob man bereits einen solchen Abschnitt oder erst eine Vielzahl davon als "Borste" betrachtet, ist eher willkürlich und letztlich ohne Belang.

Im Falle von Aramidfaserbürsten, welche eine feine, weiche Struktur zeigen, wäre es vielleicht besser, von "Bürstenhaaren" zu sprechen.

Zur Verdeutlichung sind in der Figur nur zwei Abschnitte 5, 6, d.h. "Borsten", gezeigt, deren Dicke um ein Vielfaches zu groß dargestellt ist und in Wirklichkeit eher im Bereich von wenigen Tausendstel bis zu wenigen Hundertstel von Millimetern liegt. Die Abschnitte 5, 6 sind schlaufenartig um einen runden Kern 1 1 gelegt und führen beidseitig ohne Überkreuzung in der Weise von diesem weg, daß jeweils beide Stirnflächen 7, 9 bzw. 8, 10 jedes Abschnitts 5 bzw. 6 die selbe - gedachte - Fläche F tangieren, welche zumindest annähernd mit der Oberfläche des Gegenbauteils konform ist, d.h. hier einer - räumlichen - Kreiszylinderfläche mit der Längsmittelachse X entspricht. Die leicht gebogene Anordnung der Abschnitte 5, 6 mit seitlicher Anlage an der Stützplatte 4 weist auf die Betriebsverhältnisse mit Überdruck auf Seite der Deckplatte 3, d.h. auf der linken Seite, hin. Die Fixierung der Abschnitte 5, 6 auf dem Kern 11 erfolgt reibschlüssig mittels des C-förmigen, durch elastische Querschnittsaufweitung vorgespannten Klemmprofils 12, welches aus einem geschlitzten Rohr geformt sein kann. Außerhalb des Klemmbereiches, d.h. von der Fläche F bis zum Teil 12, verlaufen die Abschnitte 5, 6 - im unbelasteten Zustand - im wesentlichen radial oder radial und in Umfangsrichtung, d.h. mit einem definierten Anstellwinkel (bis etwa 45°) in Umfangsrichtung. Schräg angestellte "Borsten" sind in Radialrichtung nachgiebiger, d.h. sie gleichen Lageabweichungen des Gegenbauteils besser aus. Eine Wellenrotation ist aber nur in Schrägungsrichtung der "Borsten" zulässig. Dies ist dem Fachmann geläufig und deshalb nicht näher dargestellt. Bei den "Borsten" handelt es sich erfindungsgemäß um Abschnitte 5, 6 von in gewickelter Anordnung vorliegenden Strängen bzw. Fäden aus Aramidfasern. Gemäß einem eingangs zitierten, patentrechtlich geschützten Verfahren werden die Stränge/Fäden um zwei gerade, parallel beabstandete Kerne gewickelt und auf diesen mittels Klemmprofilen fixiert. Dann werden die Wicklungen axial gegeneinander verschoben, um einen Anstellwinkel zu erzeugen. Anschließend werden die Wicklungen mittig zwischen den Kernen durchtrennt, so daß zwei identische, gerade Bürsten, jeweils mit Kern und Klemmprofil entstehen. Diese werden ringförmig gebogen und an einer Stoßstelle durch Schweißen, Löten, Kleben o.ä. gefügt, wobei zu beachten ist, daß die Kunststoffasern nicht thermisch geschädigt bzw. zerstört werden. Denkbar wäre u.a. ein Laschenstoß mit Schweißpunkten, wobei Wärme über die Schweißkontakte abführbar ist. Jede ringförmige, in sich zusammenhängende Bürste wird in ein zweiteiliges - oder mehrteiliges - Gehäuse integriert, so daß der gewünschte Bürstendichtring vorliegt. Die freien, hervorstehen-den Borstenenden können dann noch genauer auf Maß bearbeitet werden (Fläche F).

Die zähen, reißfesten Aramidfasern sind relativ schwer zu durchtrennen, so daß spezielie Trennmethoden erforderlich sein können. Abgesehen von mechanischem Schneiden, Stanzen, Kanten etc. ist hier besonders an Laserstrahlschneiden ohne und mit Kühlung sowie an Wasserstrahlschneiden ohne und mit abrasiven Zusätzen gedacht.

## Patentansprüche

1. Bürstendichtring (1) für den Einsatz als Dichtungselement zwischen relativ zueinander beweglichen Bauteilen, insbesondere zwischen einem Rotor und einem Stator als statorfestes Element, mit einem ringförmigen Gehäuse (2) sowie mit einer Vielzahl von innerhalb des Gehäuses befestigten, radial oder axial aus der Gehäusekontur vorstehenden Borsten, deren freie Stimflächen eine gedachte, rotationssymmetrische oder ebene Fläche tangieren, wobei die Borsten aus Abschnitten (5, 6) von in gewickelter Anordnung vorliegenden Strängen und/oder Fäden bestehen, wobei jeder Abschnitt in der Weise schlaufenförmig um einen Kern (11) herum sowie ohne Überkreuzung von diesem weg verläuft, dass seine beiden Stirnflächen die selbe gedachte, vom Kern (11) beabstandete Fläche tangieren, und wobei die Abschnitte (5, 6) in mehreren Lagen übereinander um den Kern herum angeordnet und mit einem Klemmprofil (12) fixiert sind, **dadurch gekennzeichnet, dass** die Stränge und/oder Fäden ausschließlich aus feinen, engelshaarartigen Aramidfasern bestehen, und dass deren Abschnitte (5,6) nur durch Reibschluss zwischen dem Kern (11) und dem Klemmprofil (12) fixiert sind.

2. Bürstendichtring nach Anspruch 1, **dadurch gekennzeichnet, dass** der Kern (11) aus einem Metalldraht mit rundem Querschnitt, das Klemmprofil (12) aus einem metallischen, in Längsrichtung geschlitzten Rundrohr geformt ist.

3. Bürstendichtring nach Anspruch 1 oder 2, **dadurch gekennzeichnet, dass** die Abschnitte (5, 6) außerhalb des Klemmbereichs (12) zusätzlich zu ihrer - im wesentlichen - radialen oder axialen Orientierung eine Richtungskomponente in Umfangsrichtung aufweisen.

4. Bürstendichtring nach einem oder mehreren der Ansprüche 1 bis 3, **dadurch gekennzeichnet, dass** die Abschnitte (5, 6) Stirnflächen (7, 9; 8, 10) aufweisen, die durch mechanisches Schneiden oder Abscheren, durch Laserstrahlschneiden, ggf. mit Wasserkühlung ("Lasermicrojet-Verfahren"), oder durch Wasserstrahlschneiden hergestellt sind.

5. Bürstendichtring nach einem oder mehreren der Ansprüche 1 bis 4, **dadurch gekennzeichnet, dass** die als Borstenmaterial verwendeten Aramidfasem in ihrer chemischen und physikalischen Struktur dem Kevlar - Typ 49 der Firma DuPont entsprechen.

6. Verwendung eines Bürstendichtringes nach einem oder mehreren der Ansprüche 1 bis 5, **dadurch gekennzeichnet, dass** er für die Abdichtung von vorwiegend gasförmigen Fluiden, einschließlich Wasserstoff, ausgelegt ist.

7. Verwendung eines Bürstendichtringes nach einem oder mehreren der Ansprüche 1 bis 5, **dadurch gekennzeichnet, dass** er für den Einsatz in Turbomaschinen aller Art sowie in Elektrogeneratoren ausgelegt ist.

## Claims

1. A brush sealing ring (1) for use as a sealing element between two components which are able to move in relation to one another, in particular between a rotor and a stator as a fixed element, having an annular housing (2) and a plurality of bristles which project radially or axially from the housing contour and are fixed inside the housing, the free end faces of said bristles touching an imaginary rotationally symmetrical or flat surface and said bristles consisting of sections (5, 6) of strands and/or threads in a wound arrangement, each section running around the core (111) in a loop and away from it without crossing it in such a manner that both its end faces touch the same imaginary surface positioned a distance from the core (11) and the sections (5, 6) being positioned around the core in several layers one on top of the other and fixed with a clamping profile (12),
**characterised in that**
the strands and/or threads consist exclusively of fine, angel hair-like aramide fibres and their sections (5, 6) are fixed between the core (11) and the clamping profile (12) by friction only.

2. A brush sealing ring in accordance with claim 1,
**characterised in that**
the core (11) is made of a metal wire of round cross-section and the clamping profile (12) is made of a circular metal tube with longitudinal slits.

3. A brush sealing ring in accordance with claim 1 or 2,
**characterised in that**
in addition to their - essentially - radial or axial alignment, the sections (5, 6) have a guiding component around their periphery positioned outside the clamping area (12).

4. A brush sealing ring in accordance with one or more of claims 1 to 3,
**characterised in that**
the sections (5, 6) have end faces (7, 9; 8, 10) which are produced by means of mechanical cutting or shearing, laser beam cutting, where appropriate with water cooling ("laser micro jet process") or by jet cutting.

5. A brush sealing ring in accordance with one or more of claims 1 to 4,
**characterised in that**
the chemical and physical structure of the aramide fibres used as the bristle material correspond to DuPont type 49 kevlar.

6. The use of a brush sealing ring in accordance with one or more of claims 1 to 5,
**characterised in that**
it is designed for sealing predominantly gaseous fluids including hydrogen.

7. The use of a brush sealing ring in accordance with one or more of claims 1 to 5,
**characterised in that**
it is designed for use in turbo engines of all types and in electric generators.

## Revendications

1. Bague d'étanchéité sous forme de brosse (1) destinée à être utilisée à titre d'élément d'étanchéité entre des pièces de construction mobiles les unes par rapport aux autres, en particulier entre un rotor et un stator à titre d'élément fixé sur le stator, comprenant un boîtier (2) annulaire ainsi qu'une pluralité de poils de brosse faisant saillie dans le sens radial ou axial depuis le contour du boîtier et fixés à l'intérieur du boîtier, poils dont les surfaces frontales libres sont tangentes à une surface proposée, à symétrie de rotation ou plane, les poils de la brosse étant constitués de sections (5, 6) d'écheveaux et/ou de fibres enroulé(e)s, chaque section s'étendant en forme de boucle autour d'un noyau (11) ainsi qu'en s'écartant de celui-ci sans enjambement de telle sorte que ses deux surfaces frontales soient tangentes à cette surface imaginaire, espacée du noyau (11), et les sections (5, 6) étant disposées dans plusieurs positions les unes au-dessus des autres autour du noyau et étant fixées avec un profil pour pincer (12), **caractérisée en ce que** les écheveaux et/ou les fibres sont constitué(e)s exclusivement de fines fibres d'aramide, de type cheveu d'ange, et **en ce que** leurs sections (5, 6) ne sont fixées que par un entraînement par friction entre le noyau (11) et le profil de serrage (12).

2. Bague d'étanchéité sous forme de brosse selon la revendication 1, **caractérisée en ce que** le noyau (11) est formé à partir d'un fil métallique présentant une section transversale ronde, le profil de serrage (12) est formé à partir d'un tube rond métallique, rainuré dans le sens longitudinal.

3. Bague d'étanchéité sous forme de brosse selon la revendication 1 ou 2, **caractérisée en ce que** les sections (5, 6) comprennent à l'extérieur de la zone de serrage (12), en plus de leur orientation sensiblement- radiale ou axiale, une composante de direction dans la direction périphérique.

4. Bague d'étanchéité sous forme de brosse selon l'une ou plusieurs des revendications 1 à 3, **caractérisée en ce que** les sections (5, 6) comprennent des surfaces frontales (7, 9 ; 8, 10) qui sont fabriquées par découpage mécanique ou cisaillement, par découpage au laser, éventuellement par refroidissement à l'eau (« procédé de microjet laser »), ou par découpage au jet d'eau.

5. Bague d'étanchéité sous forme de brosse selon l'une ou plusieurs des revendications 1 à 4, **caractérisée en ce que** la structure chimique et physique des fibres d'aramide utilisées comme matériau des poils de brosse correspond au Kevlar - type 49 de la société DuPont.

6. Utilisation d'une bague d'étanchéité sous forme de brosse selon l'une ou plusieurs des revendications 1 à 5, **caractérisée en ce qu'**elle est étudiée pour l'étanchéification de fluides généralement gazeux, dont l'hydrogène.

7. Utilisation d'une bague d'étanchéité sous forme de brosse selon l'une ou plusieurs des revendications 1 à 5, **caractérisée en ce qu'**elle est étudiée pour être utilisée dans tous les types de turbomachines ainsi que dans les générateurs électriques.
